# EUROPEAN PATENT APPLICATION

(11) **EP 0 871 151 A2**
(43) Date of publication of application: **14.10.1998**
(21) Application number: 98302768.1
(22) Date of filing: 08.04.1998
(51) Int. Cl.: G08B 21/00

(54) **Personal security system**

(30) Priority: 08.04.1997 GB 9707121
(71) Applicant: Foxguard Limited, Bridgwater, Somerset TA6 4 BH (GB)
(72) Inventor: Palmer, Colin, Highbridge, Somerset TA9 3NW (GB); Samways, Paul, Skipton, North Yorkshire, BD23 1HE (GB)
(74) Representative: Wilson, Nicholas Martin

(57) **Abstract**

A personal security system comprising a portable actuator (10) and a controller (20) installed in a vehicle (100). The actuator (10) is operable to produce a distress signal which, when received by the controller (20), causes the controller to operate one or more of the vehicles door locks, siren (36) and/or interior light (30). The controller (20), after receiving the distress signal, ascertains whether or not the actuator (10) is inside or outside the vehicle (100) by monitoring the condition of the vehicle's electrical system and the condition of the vehicle's doors. Operation of the door locks, siren (36) and interior light (30) differs depending upon whether the actuator (10) is inside or outside the vehicle (100).

## Description

This invention relates to a personal security system, and particularly but not exclusively to a personal security system involving installation in a motor vehicle.

Many people are the victim of violent crime against the person, and several methods have been devised for assisting a victim in overcoming his or her assailant. Some people carry aerosol spray cans to be sprayed in the face of an attacker during assault; however, that is unsatisfactory as it may lead to injury being suffered by the attacker leading to liability on the part of the victim. Accordingly, as an alternative to the above, personal security alarms have been devised which on activation produce a high pitched squeal of very high intensity, which is sufficient to startle an assailant into releasing a victim and is also useful for attracting the attention of passers-by. Such alarms are often known as rape alarms.

The above types of alarm are of limited effectiveness in that they only give the victim a small head start over the assailant in making an escape. Such a head start may not be sufficient if a refuge such as a crowded public place or a vehicle is not readily available.

Accordingly, it is an object of the present invention to provide further security for a victim of an assault.

According to the invention there is a provided a personal security system comprising a portable actuator, a controller for installation in a vehicle and operable to control the operation of a door lock thereof, and a wireless communications link between said actuator and said controller, wherein the actuator comprises distress means operable to produce a distress signal, such that the actuator is operable to communicate with the controller in use to control the door lock thereby defining a refuge with their vehicle for a user in distress. In that way the actuator may be activated by a user to put into use a distress signal and then approach a vehicle to which the controller has been fitted, the controller having unlocked the vehicle to allow entry to the use of the personal security system.

The actuator preferably comprises a distress switch operable to activate the distress means thereby producing the distress signal. The wireless communications link in use may conduct the distress signal produced by the actuator towards the controller. The actuator may also comprise a siren operative in response to the distress means producing a distress signal to generate an audible alarm.

The controller may be operative in response to the receipt of a distress signal from the distress means of the actuator to enter a distress mode. The distress mode may comprise emitting an audible alarm. The distress mode may also include ascertaining whether the actuator is inside or outside the vehicle to which the controller has been fitted, and if the actuator is outside the vehicle then unlocking the driver door to receive the user. On receiving the user, the controller may sense the closing of the driver door, and thereafter lock said door. The controller may also be operative to lock all personal access doors to a vehicle in which the controller is fitted.

The portable actuator may comprise a keyfob. The keyfob may include a panic button operative to activate the distress means. The keyfob may furthermore include a locking button operative to produce a locking signal which in use is transmitted across the wireless communications link towards the controller. On receipt of such a locking signal, the controller may be operative to lock or unlock one or more of the doors of the vehicle. The controller may include door monitoring means operative to monitor whether the doors of the vehicle are in a locked or unlocked state.

According to a further aspect of the present invention there is provided a method of operating a personal security system having a portable actuator, a controller installed in a vehicle and operable to control the operation of a door lock thereof, and a wireless communications link between the actuator and the controller, the actuator including a distress means operable to produce a distress signal such that, in use, the actuator communicates with the controller via the wireless communications link to control the operation of the door lock, and the controller having means to monitor the condition of the vehicle electrical system and the condition of a vehicle door, the method comprising the steps of:
operating the actuator to produce the distress signal;
the controller receiving the distress signal and sensing the condition of the vehicle electrical system and vehicle door; and
depending on the condition of the door and/or vehicle electrical system operating one or more of the door lock, a siren of the vehicle, and an interior light of the vehicle.

The method may include the additional steps of;
sensing a change in the condition of the vehicle door after the controller has received the distress signal; and
operating the door lock.

According to another aspect of the invention, a method of monitoring the state of a central locking motor having drive wires and "lock" and "unlock" states,
comprising the steps of
monitoring said drive wires for the presence of a Back EMF generated in said motor,
if a Back EMF is detected, then analyzing the nature of said back ELF to ascertain the sense of transition between said "lock" and "unlock".

The above method is particularly advantageous in the situation where a central locking motor of a door of a vehicle comprises only drive wires, in which case the motor itself does not include means for indicating whether the motor is in the "lock" or the "unlock" state.

Preferably, the door monitoring means is operable according to the above described methods.

Further novel aspects of the invention will be appreciated from the following description of a preferred embodiment of the invention, with reference to the accompanying drawings in which:
Figure 1 is a plan of a specific embodiment of an actuator in accordance with the present invention and
Figure 2 is a schematic diagram of the installation of a controller in a motor vehicle in accordance with the present invention.

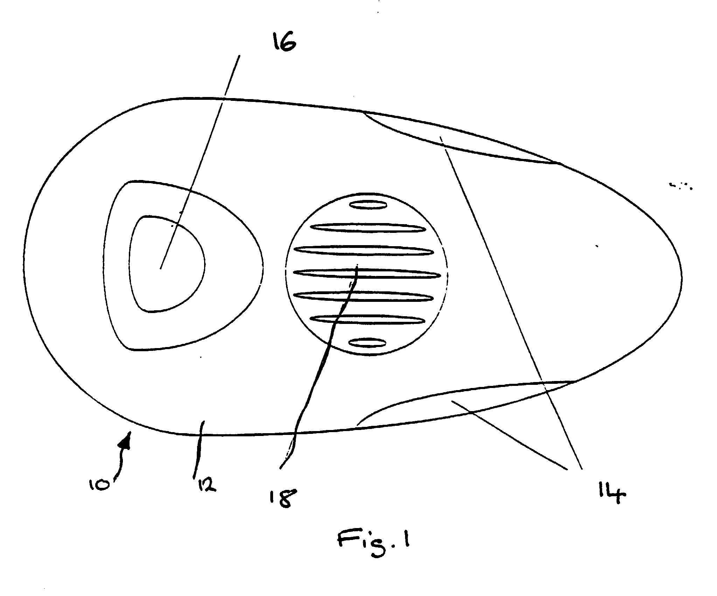

As shown in Figure 1, a key fob (10) has a generally lozenged shaped body (12). Two panic buttons (14) are disposed on opposite sides of the body. A lock button (16) is disposed on the top of the body. By placing the panic buttons on opposite sides of the body the possibility of accidental operation is reduced; activation requires simultaneous pressing of both panic buttons, which can be achieved by squeezing.

The actuator (10) also includes a siren (18) which in use produces a high pitched squealing sound.

The actuator includes simple electronic circuitry, comprising a transmitter for transmitting signals to a controller receiver and a driving circuit for driving the siren.

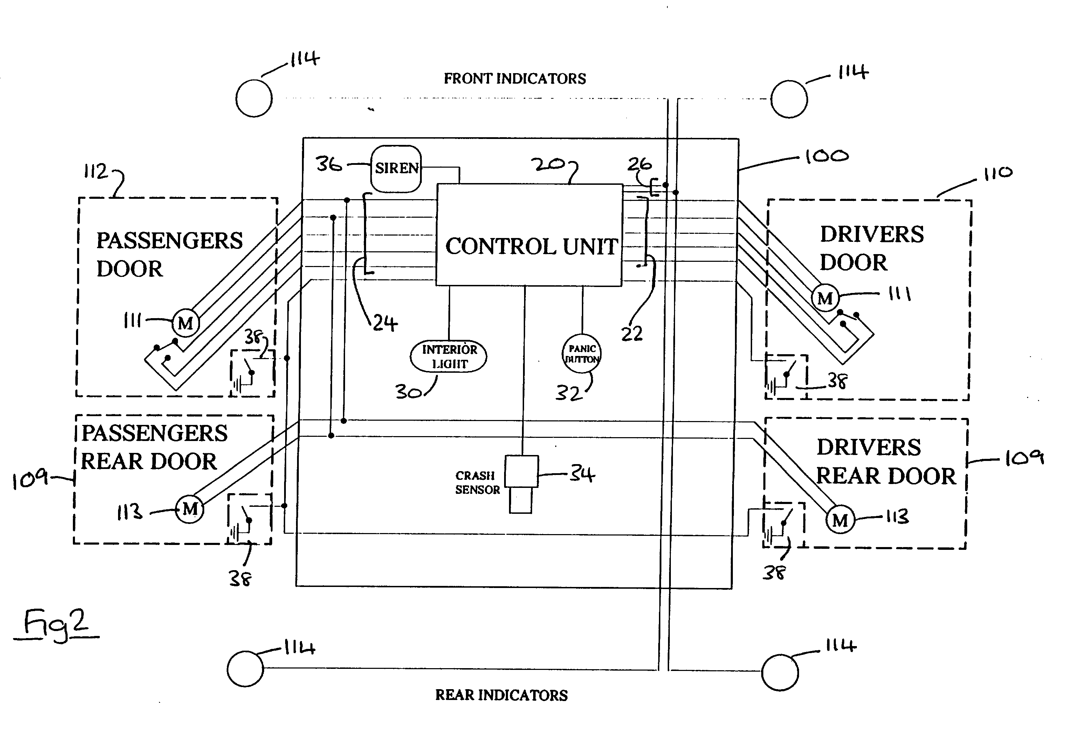

Figure 2 shows a schematic drawing of a car (100) installed with a controller (20). As original equipment the car (100) typically includes a driver's door panel (110), a front passenger's door panel (112) and rear door panels (109) with each door panel. The front door locking system usually includes a five wire type central locking motor (111) and the rear door includes a two wire type central locking motor (113). The simpler two wire type central locking motor (113) is usually fitted to rear doors to reduce costs. The car also includes front and rear indicator lights (114). The control unit is connected to the driver door central locking motor (111) by five signal conductors (22), and to the other central locking motors (111, 113) by five signal conductors (24). Furthermore, two signal outputs (26) are connected to the four indicator lights (114). The controller is also connected to an interior light (30), a panic button (32), a crash sensor (34), a siren (36) and door switches (38).

The controller (20) incorporates electronic circuitry to process data received from the motors (111, 113) a panic button (32), a crash sensor (34), door switches (38), via a wireless communications link implemented by suitable communications hardware in the controller, the actuator (10). The electronic circuitry of the controller (20) is also operative to provide signals to an interior light (30), a siren (36), the motors (111, 113) and the indicators (114).

There are two modes of operation of the personal security system as described above. These are a normal mode and a panic mode. In each mode of operation, it is important that the system knows whether the driver is inside or outside the vehicle. In order to do so, the system monitors the status of the doors using the switches which operate the interior light. It also monitors the status of the central locking motors. In some circumstances, it is not possible to determine where the driver is. For example, when the ignition is switched off and a door is opened and closed, the system will not know whether the user has vacated the vehicle or merely opened and closed the door. Under those circumstances, the system indicates to the user that it is unsure and requires a positive action from the user. The controller (20) indicates this condition by driving the siren with a continuous "soft" beep until either
(a) the ignition is switched on to indicate that the owner is inside the vehicle; the doors will then lock; or
(b) the key fob lock button is pressed to confirm that the owner is outside the vehicle; the doors will then lock.

Either of those actions re-establishes with the system the location of the user. If neither action is carried out within a pre-determined time, for example thirty seconds, the siren stops sounding and the system remains in its unsure state until the user switches on the ignition or presses the key fob lock button.

In the normal mode of operation, the system interfaces with the vehicle central locking to provide security for the user. It also provides the convenience of a remote control operation.

Once the controller (20) has established that the user is outside the vehicle, the user has the facility to unlock either the driver's door only or all doors. This feature is selected from the remote key (10). A single short press of the lock button (16) (approximately one second) will release the driver's door. If the button is pressed again within five seconds of the first press, all doors will be released. When an unlock signal is received, the control unit flashes the indicators (114) three times. At the same time as the driver's door unlocking, the interior light (30) will come on. The light (30) will extinguish when the ignition is switched on or if the radio key (10) is pressed.

Once the controller has established that the user is inside the vehicle, and when the ignition is switched off, the driver's door will unlock automatically. If the key fob button is pressed, all of the doors will be unlocked. If the ignition is switched off and the driver's door is opened, pressing the button will unlock the doors. With the ignition on, pressing the button will release all other doors but not the driver's door. Further presses of the button will alternately lock and unlock the other doors.

In order to lock the vehicle, once the controller has established that the driver is outside the vehicle, pressing the button on the key will lock all doors. The driver's door will only lock if it is closed. If the driver is inside the vehicle, when the ignition is switched on, all doors will lock automatically. If the ignition is switched off and a door is not opened, all doors will lock if the button is pressed.

It is important to note that in many cars manual central locking is provided. The present invention will not effect the ability to lock or unlock the doors centrally by manual means.

There are two circumstances when the user may wish to initiate the panic condition. These are:
(i) panic activated from outside of the vehicle, i.e. in the event of personal attack of the user as a pedestrian;
(ii) panic activated from inside of the vehicle, i.e. when the driver of the vehicle feels threatened by another road user.

It is important that the system can differentiate between these two conditions, since the system response is different. The system differentiates between the two conditions in the following way.

When the ignition is on, it is assumed by the controller (20) that panic is being activated from inside the vehicle.

When the ignition is off, it is assumed that panic is being activated from outside the vehicle. The only time that this is not the case is when the system has not seen a door open/close sequence since the ignition was switched off. In that case, it is assumed that the owner is still inside the vehicle. In that condition if the panic button (32) is now pressed, only the siren will sound. No action will be performed on the doors until another input is detected (either ignition or the press of a button (14, 16) on the key fob (10).

When the panic is activated outside the vehicle by simultaneously pressing the two panic buttons (14) on the key fob (10), the key fob siren (18) sounds immediately. It would also start transmitting of a distress signal by the internal electronics of the key fob (10). If the vehicle (100) is within the transmission range of the key fob (10), typically 20 metres, the vehicle siren (36) will be activated to sound immediately, the interior light (30) will illuminate and the central locking will unlock the driver's door only. In this mode all doors can be opened by pressing the lock button (16) after pressing the panic buttons (14).

While the system is still in panic mode, if the driver's door is seen to open and close, the central locking will lock the driver's door and all other doors, the siren (36) will continue to sound and the interior light (30) will remain on. The car (100) may be driven but the siren (36) will still sound.

If the key fob panic buttons (14) are pressed again whilst panic is in progress, the key fob siren (18) will turn off. The vehicle siren (36) will still sound, the interior light (30) and the central locking (111,113) will remain on. If the interior panic switch (32) is pressed whilst panic is in progress, the siren (36) and the interior light (30) will turn off but the central locking (111, 113) will remain on.

If no action is taken during the panic condition, the vehicle siren (36) will turn off automatically after thirty seconds and the interior light (30) will extinguish. The key fob siren (18) will also turn off automatically after it has been on for about five minutes; this period is set to suit circumstances of use. The system will then return to normal mode as described above.

If the user is inside the vehicle, panic may be initiated either by pressing the panic buttons (18) on the key fob (10) or by pressing the internal panic switch (32) on the vehicle (100).

When the panic is initiated, the siren (36) on the vehicle (100) will sound immediately, the interior light (30) will illuminate and the central locking (111, 113) will lock all doors. If the panic buttons (14) on the key fob (10) were pressed, the key fob siren (18) will also sound. The car (100) may be driven but the siren (32) will remain sounding.

If the key fob panic buttons (14) are used to initiate the panic mode and are pressed again whilst panic mode is in progress, the key fob siren (18) will turn off. The vehicle siren (36) will remain sounding, the interior light (30) and the central locking (111, 113) will remain on. If the interior panic switch (32) is used to initiate the panic mode and is pressed against whilst panic mode is in progress, the siren (36) and interior light (30) will turn off but the central locking (111, 113) will remain on.

If no action is taken during the panic mode, the vehicle siren (36) will turn off automatically after thirty seconds and the interior light (30) will extinguish. The key fob siren (18) will also turn off automatically after it has been on for about five minutes. The system will then return to normal mode as described above.

The motors for the front doors of the vehicle (100), namely motors (111) are of the five wire type. That means that they include a changeover switch to indicate the position of the armature. Therefore, the position of the armature can easily be detected. In the past, the position of the armature of a two wire motor has not been detectable. The present invention allows such detection to take place. The motors of the rear doors are two wire motors (113), generally including a coil and an armature movable in the coil on the application of a voltage across the coil. The motion of the armature in the coil produces a Back EMF in the coil which is detectable by the controller. The sense of the Back EMF depends on the direction of movement of the armature. Therefore, the controller can be configured to detect the sense of the Back EMF and thereby establish which direction the armature is travelling in. In that way, the controller can store the most recent throw of the armature of the motor, and consequently the present position of the armature of the motor. Therefore, the status of the rear door motors (113) are known at all times.

The system herein described is particularly useful in defining a space of refuge within a motor vehicle for a pedestrian caught in distress. The actuator (10) may be activated, presenting an open driver's door to the user in distress, who can enter the car which will then be locked against further intrusion. Sirens (18) and (36) are particularly useful in attracting the attention of third parties who can then raise the alarm with the Police.

## Claims

1. A personal security system comprising a portable actuator (10), a controller (20) for installation in a vehicle (100) and operable to control the operation of a door lock thereof, and a wireless communications link between the actuator (10) and the controller (20), wherein the actuator (10) includes a distress means operable to produce a distress signal such that, in use, the actuator (10) communicates with the controller (20) via the wireless communications link to control the operation of the door lock.

2. A system according to claim 1 wherein the actuator (10) includes a switch (14) operable by a user to activate the distress means and thereby produce the distress signal.

3. A system according to claim 1 or claim 2 wherein the actuator (10) includes a siren (18) operable in response to activation of the distress means.

4. A system according to any preceding claim wherein the controller (20) enters a distress mode upon receipt of the distress signal from the distress means.

5. A system according to claim 4 wherein the controller, on entering the distress mode, emits an audible alarm.

6. A system according to any preceding claim wherein the portable actuator (10) comprises a keyfob.

7. A system according to claim 6 wherein the keyfob includes a panic button operable to activate the distress means.

8. A system according to claim 6 or claim 7 wherein the keyfob includes a locking button (16) operable to produce a locking signal which, in use, is transmitted across the wireless communications link to the controller (20).

9. A system according to any preceding claim wherein the controller (20) includes means to monitor whether the door lock is locked or unlocked.

10. A method of operating a personal security system having a portable actuator (10), a controller (20) installed in a vehicle (100) and operable to control the operation of a door lock thereof, and a wireless communications link between the actuator (10) and the controller (20), the actuator (10) including a distress means operable to produce a distress signal such that, in use, the actuator (10) communicates with the controller (20) via the wireless communications link to control the operation of the door lock, and the controller (20) having means to monitor the condition of the vehicle electrical system and the condition of a vehicle door (109,110.112), the method comprising the steps of:
operating the actuator (10) to produce the distress signal;
the controller (20) receiving the distress signal and sensing the condition of the vehicle electrical system and vehicle door (109,110,112); and
depending on the condition of the door (109,110,112) and/or vehicle electrical system operating one or more of the door lock, a siren (36) of the vehicle, and an interior light (30) of the vehicle.

11. A method according to claim 10 including the additional steps of;
sensing a change in the condition of the vehicle door (109,110,112) after the controller (20) has received the distress signal; and
operating the door lock.

12. A method according to claim 10 or claim 11 comprising monitoring the state of a central locking motor (113) having drive wires, said motor having "lock" and "unlock" states, the motor having an armature and a coil, the method comprising the steps of:
monitoring the drive wires for the presence of a Back EMF generated in said motor (113), and
if a Back EMF is detected then analysing the nature of said Back EMF to ascertain the movement of the armature and thus sense of transition between said "lock" and "unlock" states.

13. A method of monitoring the state of a central locking motor (113) having drive wires, said motor having "lock" and "unlock" states, the motor having an armature and a coil, comprising the steps of:
monitoring the drive wires for the presence of a Back EMF generated in said motor (113), and
if a Back EMF is detected then analysing the nature of said Back EMF to ascertain the movement of the armature and thus sense of transition between said "lock" and "unlock" states.

14. A method according to claim 12 or claim 13 including the step of storing information relating to the movement of the armature.
